Europäisches Patentamt

European Patent Office

Office européen des brevets

(11) Publication number: **0 509 638 A1**

# EUROPEAN PATENT APPLICATION

(21) Application number: **92302206.5**

(22) Date of filing: **13.03.92**

(51) Int. Cl.5: **B01D 53/04**

(30) Priority: **16.04.91 GB 9107999**

(43) Date of publication of application:
**21.10.92 Bulletin 92/43**

(84) Designated Contracting States:
**BE GB IT NL**

(71) Applicant: **The BOC Group plc**
**Chertsey Road**
**Windlesham Surrey GU20 6HJ(GB)**

(72) Inventor: **Garrett, Michael Ernest**
**92 York Road**
**Woking, Surrey(GB)**

(74) Representative: **Gough, Peter et al**
**c/o THE BOC GROUP PLC Patent Department**
**Chertsey Road**
**Windlesham Surrey GU20 6HJ(GB)**

(54) **Improved apparatus for the separation of a gaseous mixture.**

(57) A vessel 1 for use in a PSA plant contains a bed of adsorbent material which is divided into at least two parts 3, 4. The vessel 1 includes means for dividing the flow of a feed gas mixture through each part 3,4 from at least one inlet 5 to at least one outlet 8, 9.

FIG.1.

The present invention relates to apparatus for the separation of one or more components of a gaseous mixture by non-cryogenic techniques.

It is known, for example, to separate nitrogen from air using pressure swing adsorption (PSA) techniques. Air under pressure is passed through a pressure vessel containing an adsorbent material which preferentially adsorbs oxygen, carbon dioxide and water vapour thereby allowing product gas having a high percentage by volume of nitrogen to pass out from the pressure vessel.

In operation, a bed of adsorbent material is put through a cycle which includes an adsorption mode or step during which time air is pumped through the bed; most of the oxygen and a proportion of the nitrogen and substantially all of the carbon dioxide and water vapour in the feed air are adsorbed; and a nitrogen rich product gas is supplied from the outlet of the bed. The adsorbent step is followed by a desorption or regeneration mode or step during which time the outlet of the bed is closed; and the bed is vented either to atmosphere or evacuated by means of a vacuum pump so that the adsorbed gases are substantially removed from the bed thereby preparing it for its next adsorption step.

In practice, two adsorption beds are employed and operate on similar cycles which are sequenced to be out of phase with one another by 180° so that when one bed is on its adsorption step the other bed is on its regeneration step and vice versa.

The or each pressure vessel used in a PSA plant invariably consists of two dished-end pieces between which is welded a central cylindrical piece. The most expensive parts of a pressure vessel are the dished-end pieces and the assembly involved in welding the central cylindrical piece to the dished-end pieces. There is very little extra expense involved relative to the total cost of the whole pressure vessel to increase its length by increasing the length of the central cylindrical piece.

However, with PSA plants a limiting factor to the efficient use of a pressure vessel is the depth of the adsorbent material within the pressure vessel. This limit is, in fact, a function of bed fluidisation and therefore cannot be increased without the adsorbent material becoming prone to fluidisation damage.

It is an aim of the present invention to provide a pressure vessel for use in apparatus for the separation of a gaseous mixture into one or more components which for a relatively small increase in the cost of manufacture will increase substantially its capacity to produce a product gas.

According to one aspect of the present invention, an apparatus for the separation of a product gas from a feed gas mixture including the product gas, comprises at least one vessel containing a bed of adsorbent material which preferentially adsorbs the other constituents of the feed gas mixture relative to the product gas the bed being divided into two or more parts, at least one inlet for the feed gas mixture and at least one outlet for the product gas, the number of inlet(s) to outlet(s) being either in the ratio of n to n+l or n+l to n, means for dividing the feed gas mixture into at least two separate steams such that on entering the vessel via an inlet, each stream passes through only one part of the bed of adsorbent material before leaving the vessel at an outlet.

Preferably, the apparatus has only one inlet for the feed gas mixture, which inlet is arranged between two parts and each part has associated therewith an outlet for product gas; and means for dividing the flow of the gaseous mixture from the inlet into two streams each stream passing through an individual part of the adsorbent bed towards a respective outlet.

According to a further aspect of the present invention, an apparatus for the separation of a product gas from a feed gas mixture including the product gas comprises as least one vessel having two dished end pieces between which is welded a central cylindrical piece, in which the vessel contains a bed of adsorbent material which preferentially adsorbs the other constituents of the feed gas mixture relative to the product gas and which is divided into four separate parts; first, second and third inlets, the first inlet being located in the central cylindrical piece mid-way between the two dished end pieces and the second and third inlets being located at or adjacent an individual dished end piece, means for dividing the flow of the feed gas mixture entering the vessel from the first inlet into two streams; and two outlets each located between a part of the adsorbent bed immediately adjacent a dished end piece and a next adjacent part; the arrangement being such that each stream passes through an individual part of the bed towards an associated outlet and the flow of feed gas through each of said second and third inlets flows through a part of the adsorbent bed located immediately adjacent a dished end piece such that product gas leaves the vessel through an associated outlet.

Embodiments of the invention will now be described, by way of example, reference being made to the Figures of the accompanying diagrammatic drawings in which:-

Figure 1 is a diagrammatic sketch of a pressure vessel according to the present invention, suitable for use in a PSA plant and including one inlet for a feed gas mixture and two outlets for product gas;

Figure 2 is a sketch illustrating a detail of the pressure vessel of Figure 1; and

Figure 3 is a diagrammatic sketch of a different pressure vessel according to the present invention and suitable for use in a PSA plant.

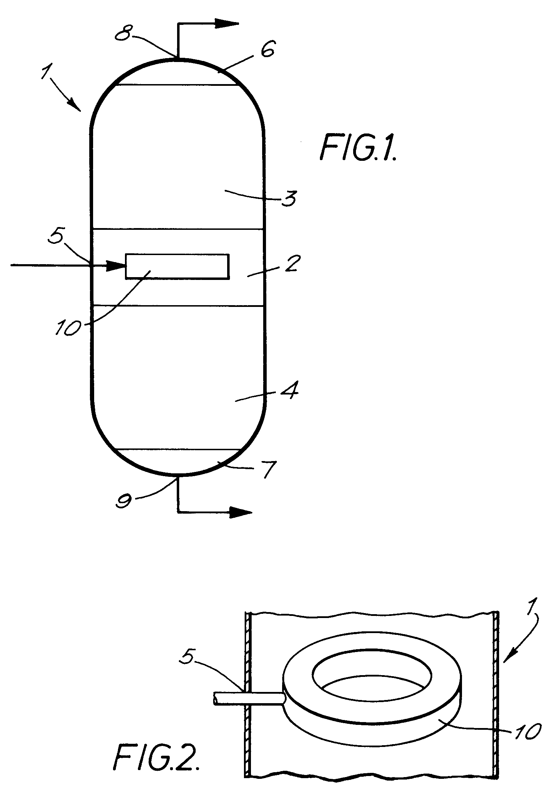

As shown in Figure 1, a pressure vessel 1 for use in a PSA plant contains a bed of adsorbent material which is divided by an alumina layer 2 into two equal parts 3, 4.

An inlet 5 for a feed gas mixture, for example, air is located on the side of the vessel 1 mid-way between two dished-end pieces 6, 7 of the vessel and between the two parts 3, 4.

Two outlets 8, 9 are provided, one at each dished-end piece 6, 7 each outlet 8, 9 being associated with a part 3, 4 of the adsorbent bed. Means is provided for dividing the flow of the feed gas mixture equally through the parts 3, 4. The gas flow will divide in accordance with the pressure drop across the vessel 1 and said dividing means may include a trimming valve or orifice located at one or both outlets 8, 9.

Referring now to Figure 2, this shows the inlet 5 is in communication with an annular distribution ring 10 positioned in the alumina layer 2 and having top and bottom plates constructed of some porous material or mesh to improve the overall dispersion of the feed gas. A distribution ring 10 would provide no impediment to filling the pressure vessel with the adsorbent material.

As an alternative to the distribution ring 10 a plenum chamber might be provided.

In use, a feed gas mixture, for example, air enters the vessel 1 at inlet 5. Any moisture in the feed gas tends to be adsorbed by the alumina layer 2. The feed gas is then divided by said means into two independent streams such that one stream passes through part 3 of the adsorbent bed where at least one component of the air is preferentially adsorbed leaving a gas rich in a product component to leave via the outlet 8. Likewise the second stream passes through part 4 of the adsorbent bed where at least one component of the air is preferentially adsorbed leaving a gas rich in a product component to leave via the outlet 9.

It has been found that by increasing the length of the central cylindrical piece between the dished-end pieces 6, 7 by only a relatively small amount the capacity of the pressure vessel 1 to produce product gas is substantially doubled. As an example, in larger PSA plants where the capacity is normally 10 tonnes per day of product gas merely by increasing the length of the central cylindrical piece by approximately 24 inches can double the capacity to approximately 20 tonnes per day.

As mentioned earlier, for the feed gas mixture to divide into equal streams it is necessary for the pressure drop across the parts 3, 4 to be equal and gas flows can be regulated by providing adjustment valves or orifice plates on the product lines leaving the outlets 8, 9.

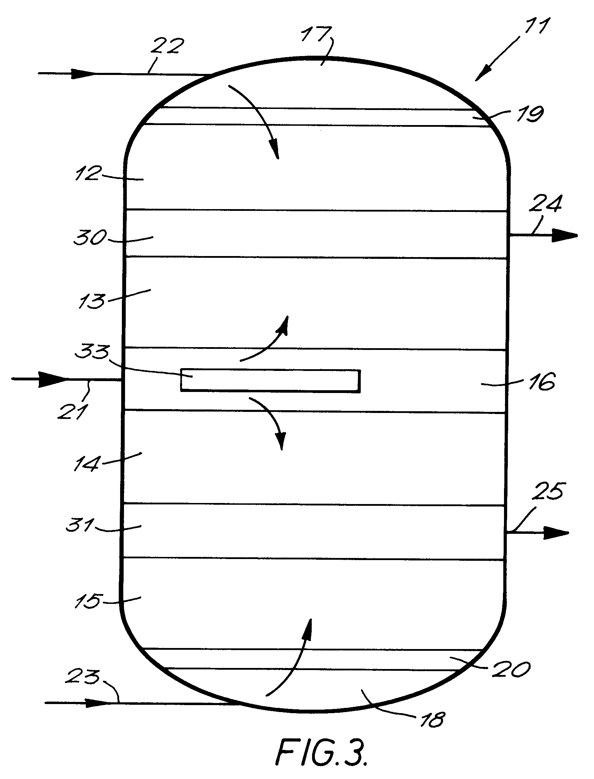

Referring now to Figure 3, a pressure vessel 11 for use in a PSA plant contains a bed of adsorbent material which is divided into four separate parts 12, 13, 14, 15. For convenience, the parts 12 to 15 may be considered to comprise two pairs namely parts 12 and 13 above an alumina layer 16 positioned centrally within the vessel 11 between the dished-end pieces 17, 18 and parts 14, 15 positioned below said alumina layer 16.

Also located within the vessel are alumina layers 19, 20 each arranged adjacent a part 12, 15 respectively.

The vessel 11 is provided with three inlets 21, 22 and 23 and two outlets 24, 25. Each outlet is aligned with a member 30, 31 located between respective parts 12, 13 and 14, 15 respectively.

In use a feed gas mixture, for example air, enters the vessel 11 via inlets 21, 22 and 23. The feed gas mixture entering the vessel 11 at inlet 21 passes through the alumina layer 16 where any moisture is adsorbed and is divided by dividing means into two separate streams flowing through parts 13 and 14 and into members 30, 31 respectively.

The feed gas mixture entering vessel 11 through inlet 22 will proceed through the alumina layer 19 which will adsorb any moisture in the feed gas; through the part 12 and into the member 30 where it will exit the vessel 11 at outlet 24 together with the first gas stream which passed through part 13.

Similarly, feed gas mixture entering the vessel 11 at inlet 23 will proceed through the alumina layer 20 where any moisture in adsorbed; through the part 15 and enter the member 31 where it will be joined by the second stream of air from the inlet 21 which passed through the part 14. The product gas in member 31 will then exit the vessel 11 at outlet 25.

Such an arrangement as illustrated in Figure 3 is of particular utility with large diameter vessels since it reduces the overall length of each adsorbent bed part thereby avoiding or minimising fluidisation damage.

It will be apparent that the embodiment illustrated in Figure 1 could be modified by the provision of two inlets each arranged at or adjacent a dished-end pieces 6, 7 and a single outlet located in the central cylindrical piece mid-way between the dished-end pieces 6, 7. The flow of feed gas mixture would proceed from each inlet, through a respective layer of alumina, through a respective part of the adsorbent bed to a central location between the parts in communication with the outlet.

In this modification the separation of the inlets performs the function of a dividing means.

## Claims

1. An apparatus for the separation of a product gas from a feed gas mixture including the product gas, comprising at least one vessel (1) containing a bed of adsorbent material which preferentially adsorbs the other constituents of the feed gas mixture relative to the product gas, the bed being divided into two or more parts (3, 4), at least one inlet (5) for the feed gas mixture and at least one outlet (8, 9) for the product gas, the number of inlet(s) to outlet(s) being either in the ratio of n to n+l or n+l to n, means for dividing the feed gas mixture into at least two separate steams such that on entering the vessel (1) via an inlet (5), each stream passes through only one part of the bed of adsorbent material before leaving the vessel (1) at an outlet (8, 9).

2. An apparatus as claimed in Claim 1, characterised in that only one inlet (5) is provided for the feed gas mixture, which inlet (5) is arranged between two parts (3, 4) and each part has associated therewith an outlet (8, 9) for product gas; and means for dividing the flow of the gaseous mixture from the inlet (5) into two streams each stream passing through an individual part (3, 4) of the adsorbent bed towards a respective outlet (8, 9).

3. An apparatus as claimed in Claim 1 or 2, characterised in that each part (3, 4) of the adsorbent bed is divided by a layer of alumina (2), the inlet (5) being aligned with said layer of alumina (2).

4. An apparatus as claimed in Claim 3, characterised in that an annular distribution ring (10) is located within the layer of alumina (2), the inlet (5) being aligned with and in communication with said annular distribution ring (10).

5. An apparatus as claimed in Claim 1 or 2, characterised in that each part of the adsorbent bed is divided by a plenum chamber, the inlet being aligned with and in communication with the plenum chamber.

6. An apparatus as claimed in any one of Claims 1 to 5, in which the vessel (1) comprises two dished end pieces (6, 7) between which is welded a central cylindrical piece, characterised in that each dished end (6, 7) is formed with a respective outlet (8, 9).

7. An apparatus as claimed in Claim 1, in which the vessel (1) comprises two dished end pieces (6, 7) between which is welded a cylindrical piece, characterised in that each dished end piece (6, 7) is formed with an inlet such that a stream of gaseous mixture passes from each inlet through a respective part (3, 4) of the adsorbent bed and leaves the vessel (1) through an outlet located in the central piece mid-way between the dished end pieces.

8. An apparatus as claimed in Claim 7, in which a layer of alumina is located between each inlet and its associated part of the adsorbent bed.

9. An apparatus for the separation of a product gas from a feed gas mixture including the product gas comprising as least one vessel (11) having two dished end pieces (17, 18) between which is welded a central cylindrical piece, characterised in that the vessel (11) contains a bed of adsorbent material which preferentially adsorbs the other constituents of the feed gas mixture relative to the product gas and which is divided into four separate parts (12, 13, 14, 15); first, second and third inlets (21, 22, 23), the first inlet (21) being located in the central cylindrical piece mid-way between the two dished end pieces (17, 18) and the second and third inlets (22, 23) being located at or adjacent an individual dished end piece (17, 18), means for dividing the flow of the feed gas mixture entering the vessel from the first inlet (21) into two streams; and two outlets (24, 25) each located between a part of the adsorbent bed immediately adjacent a dished end piece (17, 18) and a next adjacent part; the arrangement being such that each stream passes through an individual part of the bed towards an associated outlet and the flow of feed gas mixture through each of said second and third inlets (22, 23) flows through a part of the adsorbent bed located immediately adjacent a dished end piece (17, 18) such that product gas leaves the vessel through an associated outlet (24, 25).

10. An apparatus as claimed in Claim 9, characterised in that a layer of alumina (16) is located between the two central parts (13, 14) of the bed and said first inlet (21) is aligned with said layer of alumina.

11. An apparatus as claimed in Claim 10, characterised in that a layer of alumina (30, 31) is arranged between each of the second and third inlets (22, 23) and the immediately adjacent part of the bed of adsorbent material.

12. An apparatus as claimed in any one of Claims 9 to 11, characterised in that flow members divide adjacent parts of the adsorbent bed on each side of the first inlet which members are in alignment with individual outlets (24, 25).

FIG.1.

FIG.2.

FIG.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-1 542 389 (PINTSCH BAMAG AG) * page 18, paragraph 3 - page 19, paragraph 3; claim 1; figures 7,8 * --- | 1,2,4,6 | B01D53/04 |
| X | GB-A-477 657 (CARBONISATION ET CHARBONS ACTIFS) * figures 1,2; examples I,II * --- | 1,2,5,7 | |
| A | FR-A-2 296 433 (B.O.C. INTERNATIONAL LIMITED) * page 9, line 26 - page 10, line 27; claim 1; figures 4,5 * ----- | 1,5-7,9 | |
| | | | **TECHNICAL FIELDS SEARCHED (Int. Cl.5 )** |
| | | | B01D |

The present search report has been drawn up for all claims

| Place of search | Date of completion of the search | Examiner |
|---|---|---|
| THE HAGUE | 04 JUNE 1992 | CUBAS ALCARAZ J.L. |

EPO FORM 1503 03.82 (P0401)